# EUROPEAN PATENT APPLICATION

(11) **EP 2 354 638 A1**
(43) Date of publication of application: **10.08.2011**
(21) Application number: 10153034.3
(22) Date of filing: 09.02.2010
(51) Int. Cl.: F21S 10/00, F21V 8/00, G02B 6/00, G02B 27/48

(54) **Lighting apparatus for generating a decorative illumination pattern**

(71) Applicant: Koninklijke Philips Electronics N.V., 5621 BA Eindhoven (NL)
(72) Inventor: The designation of the inventor has not yet been filed
(74) Representative: Pelzer, Heiko

(57) **Abstract**

The invention relates to a lighting apparatus for generating a decorative illumination pattern. The lighting apparatus (201) is adapted to a) couple a coherent light beam into a multimode fiber (205) of the lighting apparatus (201) such that the coherent light beam propagates in different fiber modes, which are decoupled from the multimode fiber (205) and interfere for generating the first decorative illumination pattern (204), and/or b) illuminate a speckle pattern generation element with the coherent light beam for generating a speckle pattern as the first decorative illumination pattern. Since the interference of the different fiber modes and the speckle pattern are very sensitive to external influences, the first decorative illumination pattern can easily be modified over time by a first decorative illumination pattern modifying unit (206). This allows, for instance, generating a dynamic first decorative illumination pattern, which shows varying dynamic sparkling effects.

## Description

### FIELD OF THE INVENTION

The invention relates to a lighting apparatus, lighting method and lighting computer program for generating a decorative illumination pattern.

### BACKGROUND OF THE INVENTION

Illumination apparatuses producing various lighting effects are used in hospitality applications such as in hotels and restaurants as well as in atmosphere creation at homes, hospitals, museums and in shop lighting concepts. For example, light produced by a laser is directed to a diffractive optical element (DOE) for producing an illumination pattern for illuminating an object. Pixelated micro-displays such as liquid crystal spatial light modulators (LC-SLM) or liquid crystal on silicon (LCoS) allow the implementation of DOEs by feeding the display with computer data in real time, which is technology called computer generated holography and which allows modifying the DOEs and, thus, the illumination pattern over time. Computer generated holography is technically complex, because a computer generated hologram has to be calculated based on a desired illumination pattern, the calculated computer generated hologram has to be transferred to a pixelated micro display, which transforms the calculated computer generated hologram into a real physical diffraction pattern, and laser light has to be directed to the real physical diffraction pattern for generating the desired illumination pattern by diffraction.

### SUMMARY OF THE INVENTION

It is an object of the present invention to provide a lighting apparatus, lighting method and lighting computer program, which allow generating a decorative illumination pattern, which can be modified over time, in a simpler way.

In a first aspect of the present invention a lighting apparatus for generating a decorative illumination pattern is presented, wherein the lighting apparatus comprises a first light device including a coherent light source emitting a coherent light beam, wherein the lighting apparatus is adapted to generate a first decorative illumination pattern by at least one of the following ways:
a) coupling the coherent light beam into a multimode fiber of the lighting apparatus such that the coherent light beam propagates in different fiber modes, which are decoupled from the multimode fiber and interfere for generating the first decorative illumination pattern, and
b) illuminating a speckle pattern generation element with the coherent light beam for generating a speckle pattern as the first decorative illumination pattern,
wherein the lighting apparatus further comprises a first decorative illumination pattern modifying unit for modifying the first decorative illumination pattern over time.

Since the first decorative illumination pattern is generated by coupling the coherent light beam into a multimode fiber such that the coherent light beam propagates in different fiber modes, which are decoupled from the multimode fiber and interfere, or by illuminating a speckle pattern generation element with the coherent light beam for generating a speckle pattern, the first decorative illumination pattern can be generated in a very simple way. Moreover, since the interference of the different fiber modes and the speckle pattern are very sensitive to external influences, the first decorative illumination pattern can easily be modified over time by the first decorative illumination pattern modifying unit. This allows, for instance, generating a dynamic first decorative illumination pattern, which preferentially shows varying dynamic sparkling effects. For example, if the coherent light beam is red, an effect resembling burning could be induced which can be attractive at fire places, or the lighting apparatus can be adapted to produce a glittering effect as decorative first illumination pattern, which can be attractive in shop lighting and ambient creation. Furthermore, by using the multimode fiber the eye safety of the lighting apparatus can be improved, because the minimum focus area on the retina of a person is defined by the cross section of the multimode fiber.

The coherent light source is preferentially a laser and the coherent light beam is preferentially a laser beam.

The speckle pattern generation element is preferentially a rough surface of an object, wherein a speckle pattern is generated, if the rough surface is illuminated with the coherent light beam. However, the speckle pattern generation element can also be a medium showing scattering effects when being illuminated with the coherent light beam for generating the speckle pattern. This medium is, for example, a transparent medium containing reflective particles and/or particles with different refractive indices.

The first decorative illumination pattern modifying unit is preferentially adapted to modify a property of the coherent light beam such that the first decorative illumination pattern is modified. For example, the first decorative illumination pattern modifying unit can be adapted to modify the wavefront, divergence, polarization, wavelength, direction of propagation, et cetera of the coherent light beam.

The first decorative illumination pattern modifying unit can be adapted to modify, in particular, modulate, a coherent light source driving current of the coherent light source for modifying the first decorative illumination pattern. For example, if the coherent light source driving current is continuously modulated, also the working frequency of the coherent light source is changed, thereby dynamically modifying the fiber modes and, thus, the first decorative illumination pattern.

The first decorative illumination pattern modifying unit is preferentially adapted to move the first decorative illumination pattern.

It is preferred that the multimode fiber and the first decorative illumination pattern modifying unit are integrated, wherein the multimode fiber is arranged to dangle for forming the first decorative illumination pattern modifying unit. In particular by using this dangle arrangement, a small displacement or vibration caused, for example, by a person or natural vibrations can change the first decorative illumination pattern.

It is further preferred that the first decorative illumination pattern modifying unit is adapted to apply at least one of heat or coldness, vibration and pressure to the lighting apparatus for modifying the first decorative illumination pattern.

It is further preferred that the first decorative illumination pattern modifying unit is formed by arranging the multimode fiber and a temperature changing element of the lighting apparatus, which changes its temperature, such that the multimode fiber is in thermal contact with the temperature changing element. The temperature changing element is, for example, a heatsink or another part of the lighting apparatus, in particular, of the coherent light source or of another light source of the lighting apparatus, where heat is generated or dissipated. Due to changes in the heat generated by the lighting apparatus, in particular, by the coherent light source or another light source of the lighting apparatus, the interference of the different fiber modes and, thus, the first decorative illumination pattern can easily be modified. In another embodiment, the first decorative illumination pattern modifying unit can also be realized by configuring the multimode fiber such that changes in at least one of ambient temperature, pressure, displacement, vibrations et cetera, which are naturally present or induced by a person, are sufficient for modifying the interference of the different fiber modes and, thus, of the first decorative illumination pattern.

It is further preferred the first decorative illumination pattern modifying unit is formed by adapting at least a part of the multimode fiber to be integrated into a person pressure element, to which persons generally apply pressure, such that pressure is applied to the multimode fiber for modifying the first decorative illumination pattern, if the person uses the person pressure element. A person pressure element is, for example, a floor on which a person can walk, a chair or the like in which a person can seat, a bed in which a person can sleep, et cetera. If, for example, a person walks on the floor, pressure can be applied to the multimode fiber such that the first decorative illumination pattern is modified. This allows modifying the first decorative illumination pattern based on a movement of the person.

It is further preferred that the first decorative illumination pattern modifying unit comprises an acting unit for acting on the multimode fiber such that the first decorative illumination pattern is modified. In an embodiment, the acting unit can comprise a rolling unit with a motor for rolling the multimode fiber, and/or a piezoelectric element, for example, for extending the multimode fiber for inducing phase changes of the fiber modes, thereby modifying the first decorative illumination pattern. This also allows modifying the first decorative illumination pattern in a simple way.

In an embodiment, the first light device is adapted to generate several coherent light beams, wherein the lighting apparatus is adapted to generate the decorative illumination pattern by coupling the several coherent light beams into several multimode fibers of the lighting apparatus such that the coherent light beams propagate in different fiber modes, which are decoupled from the several multimode fibers and interfere for generating several overlapping first decorative illumination patterns, wherein the first decorative illumination pattern modifying unit is adapted to modify at least one of the overlapping first decorative illumination patterns. The first light device includes, for example, several coherent light sources emitting several coherent light beams, or a coherent light beam emitted by a coherent light source is divided by a beam splitter for generating the several coherent light beams. If the several coherent light beams are coherent with respect to each other, the coherent light beams interfere such that the overlapping first decorative illumination patterns form a corresponding decorative interference illumination pattern.

The lighting apparatus can be adapted such that different coherent light beams are coupled into different multimode fibers. Moreover, the lighting apparatus can be adapted to couple different coherent light beams into the same multimode fiber. The several coherent light sources can emit coherent light beams having the same wavelength or having different wavelengths.

It is further preferred that the first light device includes several coherent light sources emitting several coherent light beams having different colors, wherein the lighting apparatus is adapted to generate the decorative illumination pattern by coupling each coherent light beam into each of several multimode fibers of the lighting apparatus such that the coherent light beams propagate in different fiber modes, which are decoupled from the several multimode fibers and interfere for generating several overlapping first decorative illumination patterns having different colors, wherein the first decorative illumination pattern modifying unit is adapted to modify at least one of the overlapping first decorative illumination patterns. Coherent light beams having the same color interfere and form a first decorative illumination pattern. In this way, several first decorative illumination patterns are generated, which are overlapped for forming a decorative illumination having different colors.

It is further preferred that the lighting apparatus comprises a second light device for generating a second illumination pattern, wherein the lighting apparatus is adapted to superimpose the first and second illumination patterns. The second light device can comprise a light emitting diode, in particular, an organic light emitting diode. This allows to produce further illumination effects generated by a combination of illumination effects caused by the first and second light devices.

The speckle pattern generation element can be comprised by the lighting apparatus or can be a separate element. The speckle pattern generation element can be an optically rough surface, wherein the speckle pattern is caused by interference of the coherent light beam scattered from the optically rough surface. The object with the rough surface is, for example, a rod, a plate, a screen, a product display, a shelf, or the like.

It is further preferred that the lighting apparatus comprises a transparent light housing having a rough inner surface being the speckle pattern generation element, wherein the first decorative illumination pattern is generated on the rough inner surface as speckle pattern. The light housing can be any housing which allows housing light. The light housing is, for example, a completely or partly solid tile or plate, i.e. without or with comprising a cavity, being transparent for allowing light to propagate within the light housing. Since the light housing is transparent, the first decorative illumination pattern can be seen outside the light housing, i.e. a light housing like a light tile or light plate can be provided showing a dynamic illumination pattern. The light housing can comprise more than one rough inner surface which is illuminated by one or more coherent light beams for generating speckle patterns. In particular, the light housing can comprise two opposing rough inner surfaces. The first light source can comprise two or more coherent light sources emitting two or more coherent light beams for illuminating the rough inner surface. The two or more coherent light sources are preferentially arranged such that they illuminate the rough inner surface from different directions for obtaining different speckle patterns, i.e. dynamic speckle patterns showing dynamic sparkling effects can be generated.

The lighting apparatus is preferentially adapted such that the change in speckle pattern is performed at different frequencies for causing the speckle pattern to change dynamically in such a way that the eye of an observer sees a moving pattern. If two or more coherent light sources are used, the frequencies of the two or more lasers are preferentially synchronized such that, while the total effect takes place at a frequency of less than 50 Hz, the intensity of the light stays constant and the effect is not experienced as intensity variation. The lighting apparatus can be adapted to vary one waveform in relation to another waveform, in order to obtain laser lighting showing advanced moving dynamic sparkling effects.

It is further preferred that the first light device comprises two coherent light sources emitting two coherent light beams for illuminating the rough inner surface of the light housing, wherein the two coherent light sources are arranged at two opposing ends of the light housing. This can increase the directional visibility.

It is further preferred that the light housing comprises a redirecting surface for redirecting the coherent light beam towards the rough inner surface. The redirecting surface can have a redirection structure and/or can be reflective for redirecting the coherent light beam to the rough inner surface. The reflective surface may be specular reflective or diffuse reflective. This can increase the light output from a surface of the light housing. The redirecting surface can be partially transparent or patterned.

The lighting apparatus can comprise two or more light housings, in particular, two or more light plates or light tiles. In this configuration two or more light housings leading to two or more spatially different speckle patterns are preferentially placed on top of each other such that the resulting speckle patterns overlap and each of them have another coherent light beam of another coherent light source of the first light device coupled into it. The first decorative illumination pattern modifying unit is then preferentially adapted to change the intensity of at least one of the coherent light sources over time such that the total intensity coming out of the light housings is constant over time. Also in this way a moving speckle effect can be produced.

It is further preferred that the first light device comprises several coherent light sources emitting several coherent light beams which illuminate the speckle pattern generation element for generating several overlapping speckle patterns forming the first decorative illumination pattern, wherein the first decorative illumination pattern modifying unit is adapted to modify the frequency of at least one of the several coherent light sources for modifying the first decorative illumination pattern. By modifying the frequency of at least one coherent light source, a dynamic sparkling speckle pattern can be obtained. In an embodiment, between the respective coherent light source and the speckle pattern generation unit a scattering element is placed for modifying the respective speckle pattern.

It is further preferred that the first decorative illumination pattern modifying unit is adapted to modify the position of the coherent light beam for modifying the first decorative illumination pattern. For example, the first decorative illumination pattern modifying unit can be adapted to modify the position of the coherent light source for modifying the position of the coherent light beam, or the first decorative illumination pattern modifying unit can comprise a redirecting element for redirection the coherent light beam. For instance, the first decorative illumination pattern modifying unit can comprise a mechanical element like a mini-motor or a MEMS device, or a non-mechanical electro-optical element such as liquid crystal optics, a fluid focus lens/electro-wetting element, an electro-phoretic element, and/or suspended particle devices, as redirecting element. Also this can allow generating a dynamic illumination pattern.

It is further preferred that the speckle pattern generation element is a rough surface, wherein the first decorative illumination pattern modifying unit is adapted to modify the roughness of the rough surface on which the speckle pattern is generated. For example, the modifyable rough surface can be formed by an electro-optical element like a Polymer Dispersed Liquid Crystal (PDLC), Liquid Crystal Gel (LC Gel), Liquid Crystal Gradient Index (GRIN) lens array, electro-phoretic elements, et cetera, which can form a first decorative illumination pattern modifying unit for modifying the roughness of the rough surface and, thus, the speckle pattern. Also this allows generating a dynamic decorative illumination pattern, which is modified over time, in a simple way.

It is further preferred that the first decorative illumination pattern modifying unit is adapted to modify the first decorative illumination pattern with a frequency below 50 Hz. Preferentially, this frequency is in the range of 0.1 to 50 Hz, further preferred in the range of 0.5 to 20 Hz, and even further preferred in the range of 1.0 to 10 Hz. These frequencies ensure that the first decorative illumination pattern variation can be seen by a person.

In a further aspect of the present invention a lighting method for generating a decorative illumination pattern is presented, wherein the lighting method comprises:
- emitting a coherent light beam by a coherent light source of a first light device,
- generating a first decorative illumination pattern by at least one of the following ways:
   a) coupling the coherent light beam into a multimode fiber such that the coherent light beam propagates in different fiber modes, which are decoupled from the multimode fiber and interfere for generating the first decorative illumination pattern, and
   b) illuminating a speckle pattern generation element with the coherent light beam for generating a speckle pattern as the first decorative illumination pattern,
- modifying the first decorative illumination pattern over time by a first decorative illumination pattern modifying unit.

In a further aspect of the present invention a lighting computer program for generating a decorative illumination pattern is presented, wherein the lighting computer program comprises program code means for causing a lighting apparatus as defined in claim 1 to carry out the steps of the lighting method as defined in claim 14, when the computer program is run on a computer controlling the lighting apparatus.

It shall be understood that the lighting apparatus of claim 1, the lighting method of claim 14 and the lighting computer program of claim 15 have similar and/or identical preferred embodiments as defined in the dependent claims.

It shall be understood that a preferred embodiment of the invention can also be any combination of the dependent claims with the respective independent claim.

These and other aspects of the invention will be apparent from and elucidated with reference to the embodiments described hereinafter.

### BRIEF DESCRIPTION OF THE DRAWINGS

In the following drawings:
- Fig. 1: shows schematically and exemplarily an embodiment of a lighting apparatus for generating a decorative illumination pattern,
- Fig. 2: shows schematically and exemplarily a further embodiment of a lighting apparatus for generating a decorative illumination pattern comprising a multimode fiber in a dangle arrangement,
- Fig. 3: shows schematically and exemplarily a further embodiment of a lighting apparatus for generating a decorative illumination pattern, wherein a multimode fiber is arranged around a heatsink,
- Fig. 4: shows schematically and exemplarily a further embodiment of a lighting apparatus for generating a decorative illumination pattern, wherein a multimode fiber is located within the floor of a room,
- Fig. 5: shows schematically and exemplarily a further embodiment of a lighting apparatus for generating a decorative illumination, wherein a multimode fiber is rolled,
- Figs. 6: and 7 show schematically and exemplarily further embodiments of a lighting apparatus for generating a decorative illumination pattern, wherein several laser beams are coupled into several multimode fibers for generating several overlapping decorative illumination patterns,
- Fig. 8: shows schematically and exemplarily a lighting apparatus for generating a decorative illumination pattern by producing a speckle pattern on a rough surface in a spotlight configuration,
- Fig. 9: schematically illustrates a modulation of the polarization of a laser beam of a lighting apparatus for generating a moving decorative illumination pattern,
- Fig. 10: schematically and exemplarily illustrates a modulation of the wavelength of a laser beam of a laser of a lighting apparatus for generating a moving decorative illumination pattern,
- Fig. 11: illustrates schematically and exemplarily a modulation of the divergence of a laser beam of a laser of a lighting apparatus for generating a moving decorative illumination pattern,
- Fig. 12: shows a further embodiment of a lighting apparatus for generating a decorative illumination pattern in a plate configuration, wherein a speckle pattern is generated on a rough surface,
- Fig. 13: shows a further embodiment of a lighting apparatus for generating a decorative illumination pattern in a spotlight configuration, wherein two laser beams are directed onto a rough surface for generating two overlapping speckle patterns,
- Fig. 14: shows schematically and exemplarily a further embodiment of lighting apparatus for generating a decorative illumination pattern in a spotlight configuration, wherein two laser beams are scattered by a scattering element and then directed onto a rough surface for generating two overlapping speckle patterns,
- Fig. 15: shows schematically and exemplarily a further embodiment of a lighting apparatus for generating a decorative illumination pattern in a plate configuration using two lasers and a single rough surface for generating overlapping speckle patterns,
- Fig. 16: shows schematically and exemplarily a further embodiment of a lighting apparatus for generating a decorative illumination pattern in a plate configuration using two lasers and two rough surfaces for generating several overlapping speckle patterns,
- Fig. 17: shows a further embodiment of a lighting apparatus for generating a decorative illumination pattern in a plate configuration comprising two lasers, a single rough surface and a redirection structure for redirecting laser light to the rough surface for generating overlapping speckle patterns,
- Fig. 18: shows schematically and exemplarily a further embodiment of a lighting apparatus for generating a decorative illumination pattern in a plate configuration comprising two lasers, a single rough surface and a reflecting surface reflecting laser light in the direction of the rough surface for generating overlapping speckle patterns,
- Fig. 19: shows a further embodiment of a lighting apparatus for generating a decorative illumination pattern in a double plate configuration,
- Fig. 20: shows schematically and exemplarily a further embodiment of a lighting apparatus for generating a decorative illumination pattern in a plate configuration, wherein a redirecting element allows to modify the position of a laser beam for modifying the decorative illumination pattern,
- Fig. 21: shows schematically and exemplarily a further embodiment of a lighting apparatus for generating a decorative illumination pattern, wherein the roughness of a rough surface is changeable for changing a speckle pattern,
- Figs. 22 to 27: exemplarily illustrate several applications of the lighting apparatus, and
- Fig. 28: shows a flowchart exemplarily illustrating an embodiment of a lighting method for generating a decorative illumination pattern.

### DETAILED DESCRIPTION OF EMBODIMENTS

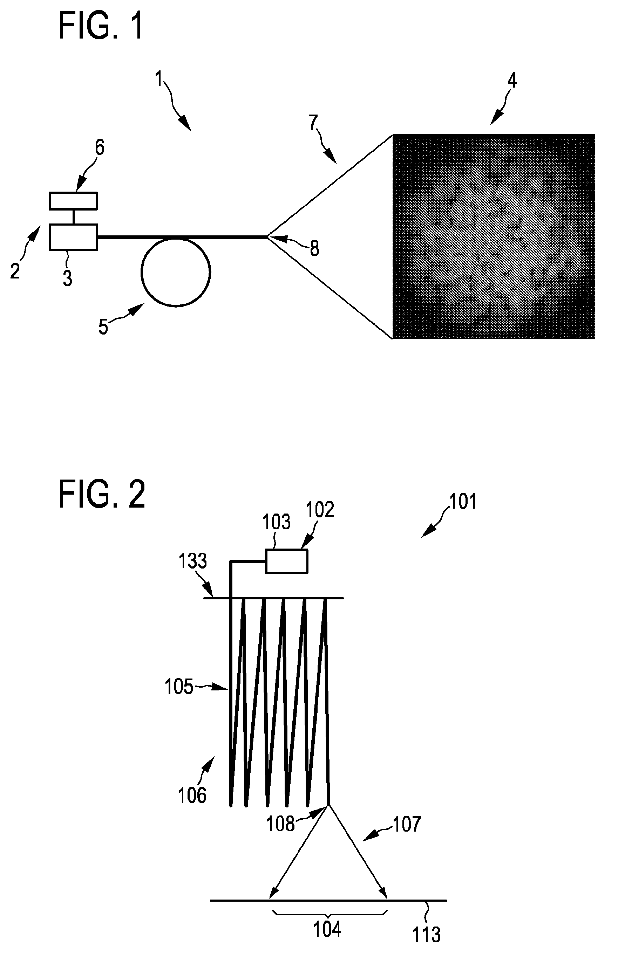

Fig. 1 shows schematically and exemplarily an embodiment of a lighting apparatus 1 for generating a decorative illumination pattern. The lighting apparatus 1 comprises a first light device 2 including a coherent light source 3 being, in this embodiment, a laser emitting a coherent light beam, i.e., in this embodiment, a laser beam. The laser beam is coupled into a multimode fiber 5 of the lighting apparatus 1 such that the laser beam propagates in different fiber modes. The fiber modes interfere with each other and are decoupled from the multimode fiber 5 at an exit end 8 of the multimode fiber 5. The decoupled laser light 7 is directed to, for example, a surface of an object for generating a first decorative illumination pattern 4. The fiber modes preferentially interfere within the multimode fiber 5 and can preferentially also interfere outside the multimode fiber. The lighting apparatus 1 further comprises a first decorative illumination pattern modifying unit 6 for modifying the first decorative illumination pattern 4 over time. The first decorative illumination pattern modifying unit 6 is, for example, adapted to modify a coherent light source driving current of the laser 3 for modifying the first decorative illumination pattern 4. The first decorative illumination pattern modifying unit 6 can, for example, be adapted to modulate the coherent light source driving current for modifying the first decorative illumination pattern 4. For example, if the coherent light source driving current is continuously modulated, also the working frequency of the laser is changed, thereby dynamically modifying the fiber modes and, thus, the first decorative illumination pattern 4.

The multimode fiber 5 and the laser 3 are preferentially adapted such that the lighting apparatus 1 is eye safe, i.e. they are adapted such that the maximal achievable intensity on the retina of a person, who looks directly into the decoupled laser light 7, is below an intensity threshold related to eye safety. The intensity threshold related to eye safety is chosen such that the retina of a person cannot be damaged by an intensity being lower than the intensity threshold. The maximal possible intensity on the retina of a person can easily be determined by dividing the maximal possible output intensity of the laser 3 by the minimally possible image area of the cross section of the multimode fiber 5 on the retina. In addition or alternatively, the lighting apparatus can comprise a further eye-safety mechanism. For example, the lighting apparatus can be adapted such that the laser is switched off, if a person is approaching the lighting apparatus. For example, the lighting apparatus can comprise a movement sensor for detecting movements in the surrounding of the lighting apparatus, wherein the lighting apparatus is adapted to switch off the laser, if a movement is detected in the surrounding of the lighting apparatus.

Fig. 2 shows schematically and exemplarily a further embodiment of a lighting apparatus 101 for generating a decorative illumination pattern. Also the lighting apparatus 101 comprises a first light device 102 including a coherent light source 103, which is, in this embodiment, a laser. The laser 103 emits a laser beam, which is coupled into a multimode fiber 105 of the lighting apparatus 101 such that the laser beam propagates in different fiber modes, which interfere and which are decoupled from the multimode fiber 105 for generating a first decorative illumination pattern 104 on surface of an object 113. In this embodiment, the multimode fiber 105 and a first decorative illumination pattern modifying unit 106 are integrated, i.e. the multimode fiber 105 is arranged to dangle for forming the first decorative illumination pattern modifying unit 106. The lighting apparatus 101 comprises a fiber support 133 being, for example, a rod or a plate, at which the multimode fiber 105 is attached at different points of the multimode fiber 105 for generating the dangle configuration. If the fiber support 133 is a rod, the multimode fiber can, for example, be wound in a loose way around the rod such that a dangle configuration is formed, for example, as schematically and exemplarily shown in Fig. 2.

By using this dangle arrangement a small displacement or vibration caused, for example, by a person or natural vibrations can change the first decorative illumination pattern 104, which is generated by the decoupled laser light 107, which has been decoupled from the multimode fiber 105 at the exit and 108.

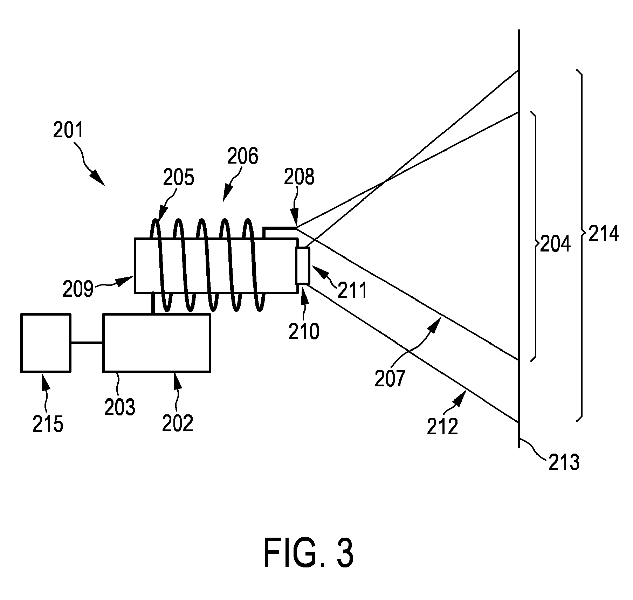

Fig. 3 shows a further embodiment of a lighting apparatus 201 for generating a decorative illumination pattern. Also the lighting apparatus 201 comprises a first light device 202 including a coherent light source 203 being, in this embodiment, a laser. The laser 203 emits a laser beam, which is coupled into a multimode fiber 205 of the lighting apparatus 201 such that the laser propagates in different fiber modes, which interfere and are decoupled at an exit end 208 of the multimode fiber 205. The decoupled laser light 207 is directed to a surface of an object 213 for generating a first decorative illumination pattern 204. The lighting apparatus 201 further comprises a second light device 210 for generating a second illumination pattern 214, wherein the lighting apparatus 201 is adapted to superimpose the first and second illumination patterns 204 and 214. The second light device 210 comprises a light emitting diode 211, which is, for example, an inorganic light emitting diode or an organic light emitting diode, and a heatsink 209.

In this embodiment, a first decorative illumination pattern modifying unit 206 is formed by arranging the multimode fiber 205 and the heatsink 209 being a temperature changing element of the lighting apparatus 201 such that the multimode fiber 205 is in thermal contact with the heatsink 209. In particular, the multimode fiber 205 is wound around the heatsink 209 for generating the thermal contact between the multimode fiber 205 and the heatsink 209. The heatsink 209 is used for dissipating the heat generated by the second light source 211. Since the temperature of the heatsink 209 changes over time, also the influence on the interference between the fiber modes and, thus, the first decorative illumination pattern 204 changes over time.

In another embodiment, the temperature changing element can be another part of the lighting apparatus, in particular, of the coherent light source or of the second light source of the lighting apparatus, where heat is generated or dissipated. Due to changes in the heat generated by the lighting apparatus 201 the interference of the different fiber modes and, thus, the first decorative illumination pattern 204 can easily be modified.

In another embodiment, the first decorative illumination pattern modifying unit can also be realized by configuring the multimode fiber such that changes in at least one of ambient temperature, pressure, displacement, vibrations et cetera, which are naturally present or induced by a person, are sufficient for modifying the interference of the different fiber modes and, thus, of the first decorative illumination pattern. For example, the multimode fiber can be configured such that a contact surface between the multimode fiber and the surrounding is enlarged for being more affectable by ambient temperature changes. Or, the multimode fiber can be arranged such that it is very simple affectable by external influences like pressure, displacement or vibrations. Such an arrangement is, for example, the above mentioned dangle arrangement.

The lighting apparatus 201 optionally further comprises a driving current controller 215 which can be adapted to also modify the first decorative illumination pattern 204 by modifying the driving current of the laser 203. Since also the driving current controller 215 can modify the first decorative illumination pattern 204, the first decorative illumination pattern modifying unit 206 can be regarded as being formed by arranging the multimode fiber 205 around the heatsink 209 and as comprising the driving current controller 215, in order to allow the first decorative illumination pattern modifying unit 206 modifying the first decorative illumination pattern 204 in at least two ways over time.

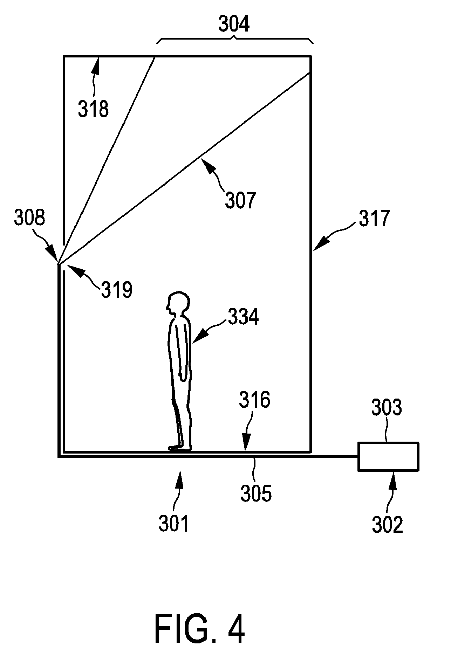

Fig. 4 shows schematically and exemplarily a further embodiment of the lighting apparatus 301 for generating a decorative illumination pattern. The lighting apparatus 301 also comprises a first light device 302 including a coherent light source 303 being, in this embodiment, a laser. The laser 303 emits a laser beam which is coupled into a multimode fiber 305 of the lighting apparatus 301 such that the laser beam propagates in different fiber modes. The different fiber modes interfere and are decoupled from an exit end 308 of the multimode fiber 305. The decoupled laser light 307 is directed to an inner surface 318 of a room 317 for generating the first decorative illumination pattern 304 on the inner surface 318. The inner surface 318 is preferentially a ceiling of the room 317. At least a part of the multimode fiber 305 is adapted to be integrated into a person pressure element 316, to which persons generally apply pressure, such that pressure is applied to the multimode fiber 305 for modifying the first decorative illumination pattern 304, if the person uses the person pressure element 316. In this embodiment, a first decorative illumination pattern modifying unit is therefore formed by adapting at least a part of the multimode fiber 305 such that it can be integrated into the person pressure element 316. The person pressure element 316 can be regarded as being a part of the first decorative illumination pattern modifying unit or the person pressure element 316 can be regarded as a separate part. In this embodiment, the person pressure element 316 is the floor of the room 317, on which a person 334 can walk. If the person 334 walks on the floor, pressure is applied to the multimode fiber 305 such that the first decorative illumination pattern 304 is modified over time. The first decorative illumination pattern 304 can therefore be modified over time based on a movement of the person 334.

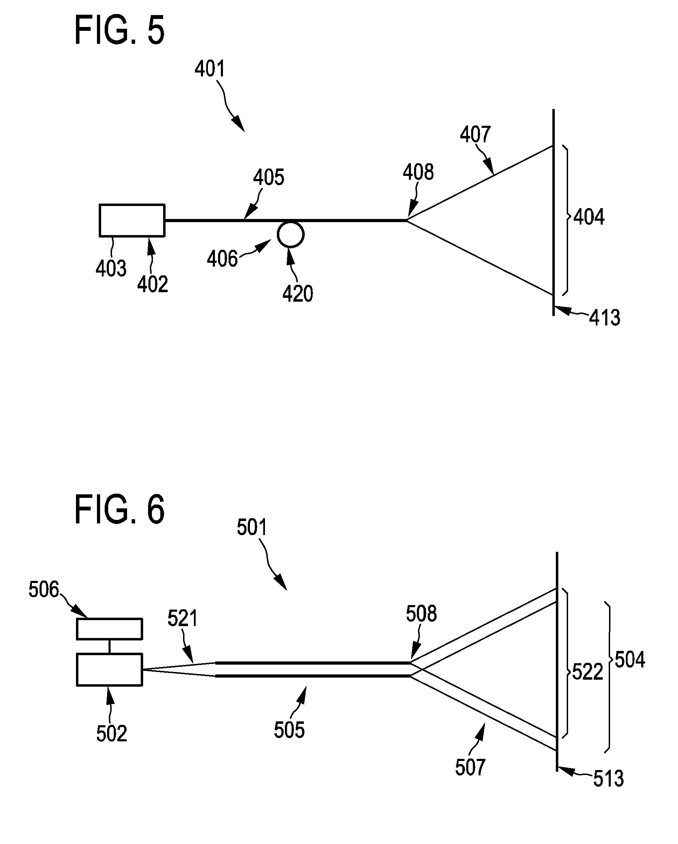

Fig. 5 shows schematically and exemplarily a further embodiment of a lighting apparatus 401 for generating a decorative illumination pattern. Also the lighting apparatus 401 comprises a first light device 402 including a coherent light source 403 being a laser in this embodiment. The laser 403 emits a laser beam, which is coupled into a multimode fiber 405 of the lighting apparatus 401 such that the laser beam propagates in different fiber modes. The different fiber modes interfere and at an exit end 408 of the multimode fiber 405 the laser light is decoupled and the decoupled laser light 407 is directed to an object 413 like a wall for generating a first decorative illumination pattern 404. A first decorative illumination pattern modifying unit 406 comprises an acting unit 420 for acting on the multimode fiber 405 such that the first decorative illumination pattern 404 is modified. In this embodiment, the acting unit 420 comprises a rolling unit, which comprises a motor, for rolling the multimode fiber 205. In another embodiment, the acting unit can comprise a piezoelectric element, for example, for extending the multimode fiber 405 or for applying displacements, vibrations, pressure, et cetera, to the multimode fiber 405 for inducing phase changes in the fiber modes and, thus, for modifying the first decorative illumination pattern 404.

Fig. 6 shows schematically and exemplarily a further embodiment of a lighting apparatus 501 for generating a decorative illumination pattern. Also in this embodiment the lighting apparatus 501 comprises a first light device 502 for generating several laser beams 521, which are coupled into several multimode fibers 505 of the lighting apparatus 501 such that the laser beams propagate in different fiber modes and interfere within the multimode fibers. In this embodiment, the first light device 502 generates two laser beams 521, wherein one of the two laser beams 521 is coupled into one of the multimode fibers 505 and the other of the two laser beams 521 is coupled into the other of the two multimode fibers 505. The laser beams are decoupled from the multimode fibers 505 at exit ends 508 of the multimode fibers 505, and the decoupled laser light 507 is directed to an object 513 for generating two overlapping first decorative illumination patterns 504 and 522. A resulting decorative illumination pattern can be generated being an interference of the overlapping first decorative illumination patterns 504, 522.

The first light device 502 comprises preferentially a single laser emitting a single laser beam which is divided by a beam splitter for generating the several laser beams 521. In another embodiment, the first light device can also comprise several lasers for emitting several laser beams.

The lighting apparatus 501 further comprises a first decorative illumination pattern modifying unit 506 for modifying at least one of the overlapping first decorative illumination patterns 504, 522. For example, the first decorative illumination pattern modifying unit 506 can be adapted to modify, in particular, modulate, the driving current of the laser for modifying the first decorative illumination patterns 504, 522.

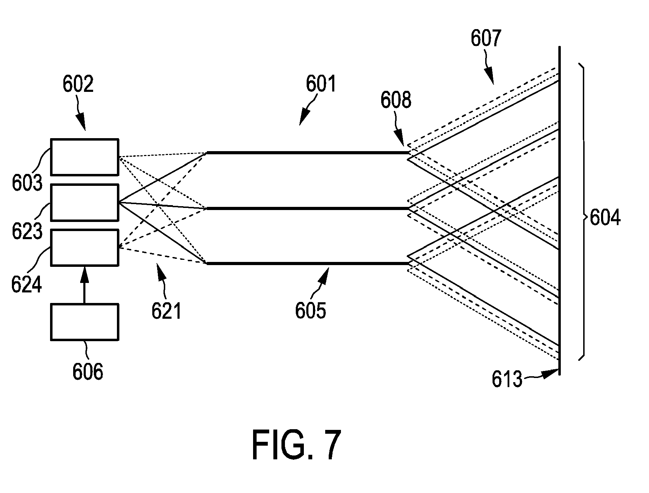

Fig. 7 shows schematically and exemplarily a further embodiment of a lighting apparatus 601 for generating a decorative illumination pattern. The lighting apparatus 601 comprises a first light device 601 including several coherent light sources 603, 623, 624 being, in this embodiment, lasers. The lasers 603, 623, 624 emit several laser beams 621 having different colors. The lighting apparatus 601 is adapted to generate a decorative illumination pattern 604 by coupling each of the laser beams 621 into each of several multimode fibers 605 of the lighting apparatus 601 such that the laser beams 621 propagate in different fiber modes. The different fiber modes of the same laser beam interfere within the respective multimode fiber and the laser light is decoupled from the several multimode fibers 605 at their exit ends 608. For each color and for each multimode fiber a first decorative illumination pattern is generated on an object 613. The several first decorative illumination patterns overlap and generate an overall decorative illumination pattern 604, wherein the decoupled laser light 607 belonging to different first illumination patterns of the same color interfere and influence the formation of the overall decorative illumination pattern 604. In this way, a colored overall decorative illumination pattern 604 can be generated.

The lighting apparatus 601 further comprises a first decorative illumination pattern modifying unit 606 for modifying at least one of the overlapping first decorative illumination patterns over time. For example, the first decorative illumination pattern modifying unit 6 can be adapted to modify the driving current of at least one of the different lasers 603, 623, 624 for modifying at least one of the overlapping first decorative illumination patterns.

It should be noted that at an exit end 608 of a multimode fiber the laser beams having different colors are decoupled at substantially the same location. In Fig. 7 these decoupled locations are shown at different positions, in order to allow Fig. 7 to show the different colors separately.

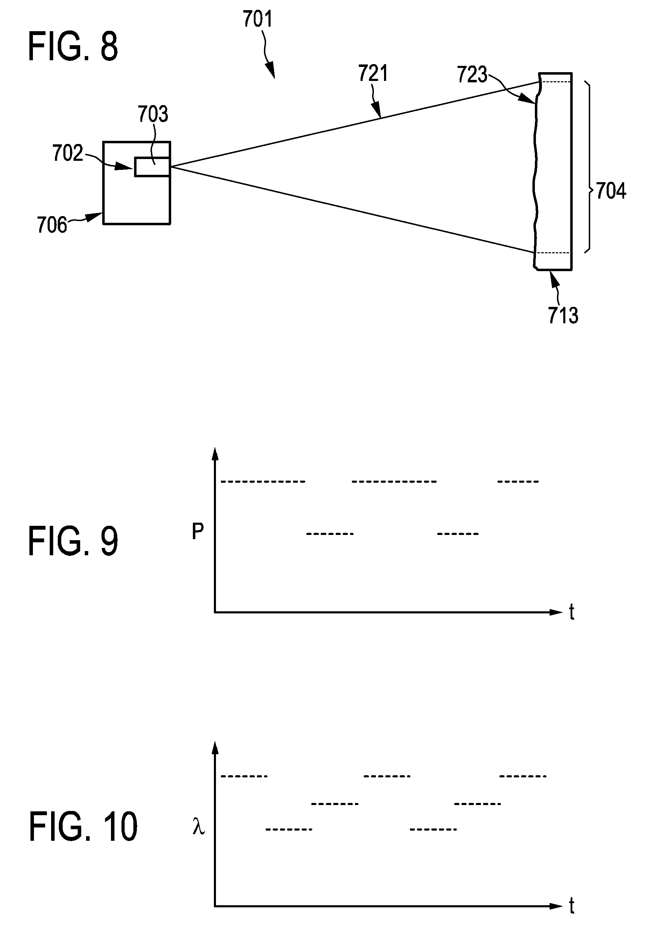

Fig. 8 shows schematically and exemplarily a further embodiment of a lighting apparatus for generating a decorative illumination pattern. The lighting apparatus 701 also comprises a first light device 702 comprising a coherent light source 703, being in this embodiment, a laser. The laser 703 emits a laser beam 721 for illuminating a rough surface 723 of an object 713 being a speckle pattern generation element. A speckle pattern is generated on the rough surface 723, wherein the speckle pattern is a first decorative illumination pattern 704. The first light device 702 preferentially further comprises a heatsink and electronics, which are not shown in Fig. 8 and in the further figures for clarity reasons.

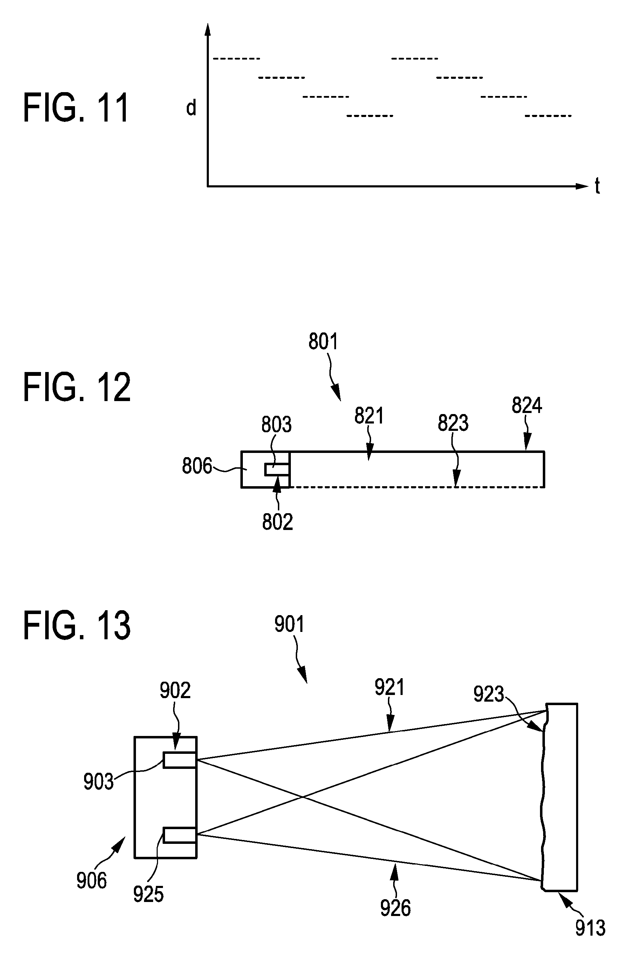

The lighting apparatus 701 further comprises a first decorative illumination pattern modifying unit 706 for modifying the first decorative illumination pattern 704 over time. In particular, the first decorative illumination pattern modifying unit 706 is adapted to modify a property of the coherent light beam 721, in particular, to modify at least one of the wavefront, the divergence, the polarization, the wavelength et cetera such that the first decorative illumination pattern 704 is modified over time. In particular, the first decorative illumination pattern modifying unit 706 can be adapted to modify the polarization of the laser light as schematically indicated in Fig. 9, which shows a possible modulation of the polarization P depending on the time t. The first decorative illumination pattern modifying unit 706 can also be adapted to modulate the wavelength λ depending on the time t as schematically exemplarily shown in Fig. 10 or to modulate the divergence in time t as schematically shown in Fig. 11. In Figs. 9 to 11 step functions are shown. However, the polarization, wavelength and divergence can also be modulated in another way, for example, they can be varied gradually and continuously in time. By modifying the properties of the laser beam a dynamic speckle pattern showing dynamic sparkling effects can be generated. This generation of a dynamic speckle pattern can be used in a spotlight configuration as shown, for example, in Fig. 8 as well as in a plate configuration as shown, for example, further below in Fig. 12.

The object 713, on which the speckle pattern is generated, can be comprised by the lighting apparatus 701 or can be a separate element. The rough surface 723 is an optically rough surface for generating the speckle pattern caused by interference of the laser light scattered from the optically rough surface 723. The object with the rough surface is, for example, a rod, a plate, a screen, a product display, a shelf, or the like.

Fig. 12 shows schematically and exemplarily a further embodiment of a lighting apparatus 801 in a configuration which could be named "plate configuration". Also the lighting apparatus 801 comprises a first light device 802 including a coherent light source 803 being, in this embodiment, a laser. The laser 803 emits a laser beam 821 for illuminating a rough inner surface 823 of a transparent light housing 824 for generating a speckle pattern as a first decorative illumination pattern. The rough inner surface is a speckle pattern generation element. The light housing 824 is adapted to house the laser light 821 and is, in this embodiment, a light tile. Since a light tile is transparent, the first decorative illumination pattern can be seen outside the light housing, i.e. the light plate can show a dynamic illumination pattern. The light tile can also be regarded as a light plate. The laser light is preferentially guided within the light housing 824 by multiple reflections and leaves the light housing mainly through refraction and reflection caused by the rough inner surface 823.

The first light device 802 with the laser 803 is preferentially arranged at an end of the light tile or light plate 824. The lighting apparatus 801 further comprises a first decorative illumination pattern modifying unit 806 for modifying the first decorative illumination pattern over time. Also in this embodiment the first decorative illumination pattern modifying unit 806 is preferentially adapted to modify a property of the emitted laser light 821, in particular, at least one of the wavefront, the divergence, the polarization, the wavelength et cetera of the emitted laser beam 821, in order to create dynamic sparkling effects. The light housing 824 can comprise at least one further rough surface for generating at least one further speckle pattern. The at least one further rough surface is preferentially arranged opposite to the first rough surface such that the corresponding two speckle patterns overlap each other.

Fig. 13 shows schematically and exemplarily a further embodiment of a lighting apparatus for generating a decorative illumination pattern. The lighting apparatus 901 comprises a first light device 902 including two coherent light sources 903, 925. In this embodiment, the two coherent light sources 903, 925 are lasers emitting two laser beams 921, 926. Each of these laser beams 921, 926 is directed to a rough surface 923 of an object 913 such that overlapping speckle patterns are generated. The overlapping speckle patterns produce the first decorative illumination pattern. The lighting apparatus 901 further comprises a first decorative illumination pattern modifying unit 906 for modifying the first decorative illumination pattern over time. In this embodiment, the first decorative illumination pattern modifying unit 906 is adapted to modify, in particular, modulate, the driving current of at least one of the lasers 903, 925 for creating dynamic sparkling effects. In particular, the first decorative illumination pattern modifying unit can be adapted to modify the frequency of at least one of the lasers 903, 925 for modifying the first decorative illumination pattern.

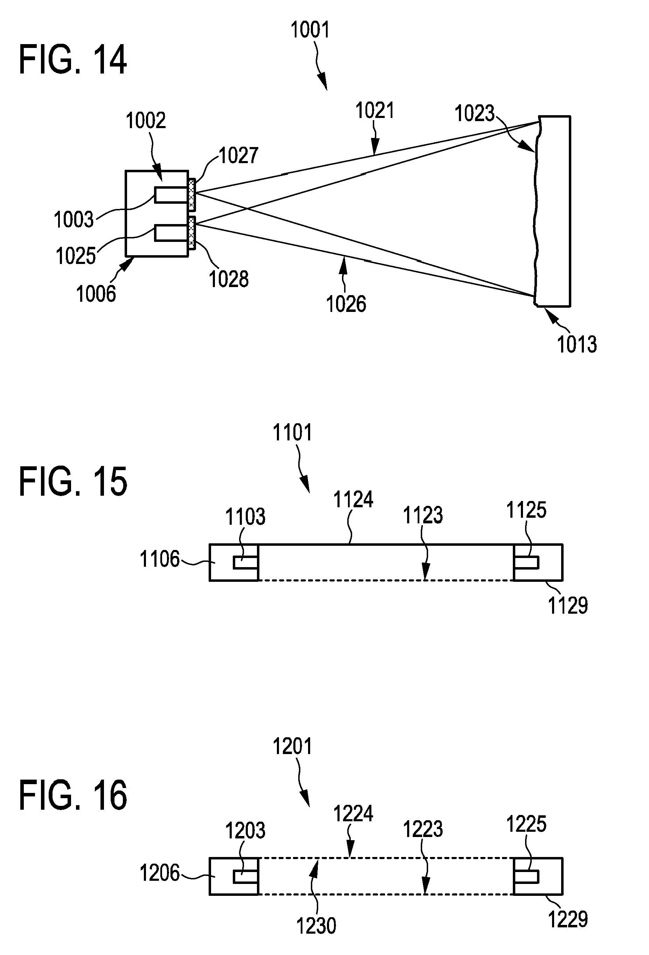

Fig. 14 shows exemplarily and schematically a further embodiment of a lighting apparatus 1001 for generating a decorative illumination pattern. The lighting apparatus 1001 comprises a first light device including two coherent light sources 1003, 1025 being, in this embodiment, two lasers. The two lasers 1003, 1025 emit two laser beams 1021 and 1026 which illuminate a rough surface 1023 of an object 1013 for generating two speckle patterns which overlap for generating a first decorative illumination pattern. The lighting apparatus 1001 further comprises a first decorative illumination pattern modifying unit 1006 being adapted to modify the frequency of at least one of the several lasers 1003, 1025 for modifying the first decorative illumination pattern. By modifying the frequency of at least one laser a dynamic sparkling speckle pattern can be obtained. Between each of the lasers 1003, 1025 and the object 1013 with the rough surface 1023 a scattering element 1027, 1028 is placed for modifying the respective speckle pattern. The scattering element 1027, 1028 is, for example, a static diffractive optical element.

Fig. 15 shows schematically and exemplarily a further embodiment of a lighting apparatus for generating a decorative illumination pattern in a plate configuration. The lighting apparatus 1101 comprises a first light device with two coherent light sources 1103 and 1125 being lasers, which emit two laser beams for illuminating a rough inner surface 1123 of a light housing 1124 being a light tile or a light plate. The two lasers 1103 and 1125 are preferentially arranged such that they illuminate a rough inner surface 1123 from different directions for obtaining different speckle patterns, which overlap for generating the first decorative illumination pattern. The lighting apparatus further comprises two first decorative illumination pattern modifying units 1106 and 1129 for modifying the first decorative illumination pattern over time. The two first decorative illumination pattern modifying units 1106 and 1129 are preferentially adapted to vary the intensities of the lasers 1103 and 1125 over time such that when the intensity of one of the lasers is decreased the intensity of the other of the lasers is increased by the same amount. In this way the total laser intensity remains the same. Since two lasers produce different speckle patterns, during the synchronized relative intensity variation the resulting speckle pattern, which results from the overlap of the two speckle patterns, appears to be moving.

The lasers 1103 and 1125 are arranged at opposing ends of the light housing 1124.

Fig. 16 shows schematically and exemplarily a further embodiment of a lighting apparatus for generating a decorative illumination pattern. The lighting apparatus 1201 shown in Fig. 16 corresponds to the lighting apparatus 1101 shown in Fig. 15, wherein these two lighting apparatuses differ in that the lighting apparatus 1101 shown in Fig. 15 comprises only a single inner rough surface 1123, whereas the lighting apparatus 1201 shown in Fig. 16 comprises two opposing rough inner surfaces 1223 and 1230 which oppose each other such that speckle patterns generated at these two rough inner surfaces 1223, 1230 overlap for generating an overlapped decorative illumination pattern. The lighting apparatus 1201 comprises lasers 1203, 1225, a light housing 1224 and first decorative illumination pattern modifying units 1206, 1229, which are similar to the corresponding lasers 1103, 1125, light housing 1124 and first decorative illumination pattern modifying units 1106, 1129, respectively, of the lighting apparatus 1101 described above with reference to Fig. 15.

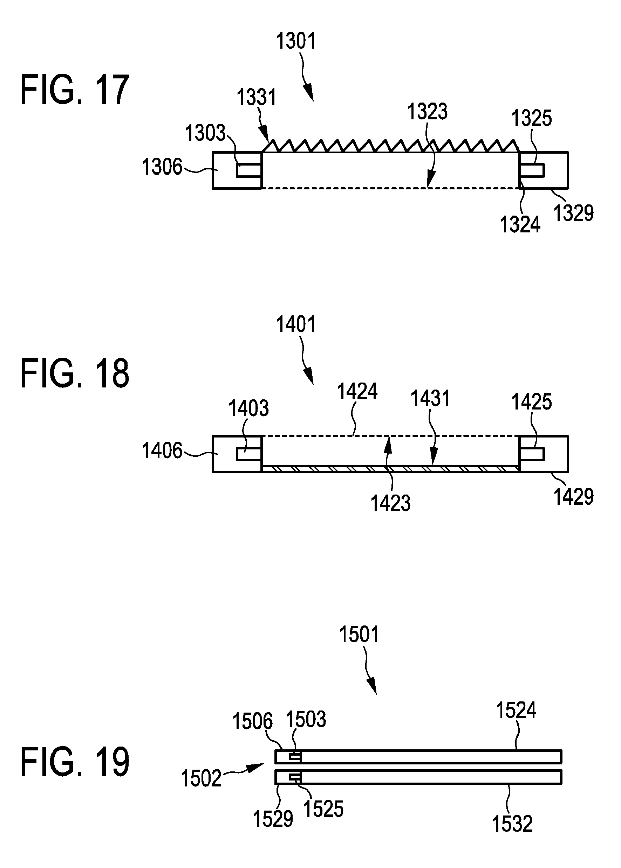

Fig. 17 shows schematically and exemplarily a further embodiment of the lighting apparatus for generating a decorative illumination pattern. The lighting apparatus 1301 shown in Fig. 17 is similar to the lighting apparatus 1101 described above with reference to Fig. 15, wherein the lighting apparatus 1301 shown in Fig. 17 differs from the lighting apparatus 1101 described above with reference to Fig. 15 in that the lighting apparatus 1301 shown in Fig. 17 comprises a redirecting surface 1331 for redirecting the laser beam towards the rough inner surface 1323. The redirecting surface 1323 comprises a redirection structure for redirecting the laser beam to the rough inner surface 1323. The further elements of the lighting apparatus 1301 shown in Fig. 17 are similar to the corresponding elements of the lighting apparatus 1101 described above with reference to Fig. 15. In particular, lasers 1303, 1325, a light housing 1324 and first decorative illumination pattern modifying units 1306, 1329 are similar to the corresponding lasers 1103, 1125, light housing 1124 and first decorative illumination pattern modifying units 1106, 1129 described above with reference to Fig. 15.

Fig. 18 shows schematically and exemplarily a further embodiment of a lighting apparatus for generating a decorative illumination pattern. The lighting apparatus 1401 shown in Fig. 18 corresponds to the lighting apparatus 1301 described above with reference to Fig. 17, wherein the redirecting surface does not comprise a redirecting structure, but is reflective for redirecting the laser beam to the rough inner surface 1423. The reflective surface 1431 may be specular reflective or diffuse reflective. The further elements of the lighting apparatus 1401 shown in Fig. 18 are similar to the corresponding elements of the lighting apparatus 1301 described above with reference to Fig. 17. In particular, lasers 1403, 1425, a light housing 1424 and first decorative illumination pattern modifying units 1406, 1429 are similar to the corresponding lasers 1303, 1325, light housing 1324 and first decorative illumination pattern modifying units 1306, 1329 described above with reference to Fig. 17.

Fig. 19 shows schematically and exemplarily a further embodiment of the lighting apparatus for generating a decorative illumination pattern. The lighting apparatus 1501 comprises two light housings 1524, 1532, in particular, two or more light plates or light tiles. In this configuration the two light housings 1524, 1532 lead to two spatially different speckle patterns which are placed on top of each other such that the speckle patterns overlap. Each of the light housings 1524, 1532 comprises a coherent light source 1503, 1525, in this embodiment, a laser, which emits a laser beam coupled into the respective light housing 1524, 1532. Each of the light housings 1524, 1532 comprises an inner rough surface for generating the speckle patterns. First decorative illumination pattern modifying units 1506, 1529 are preferentially adapted to change the intensity of the lasers 1503, 1525 over time such that the total intensity coming out of the light housings 1524, 1532 is constant over time and the overlapping speckle patterns produce a moving speckle effect.

The lighting apparatus 1501 can be regarded as a stack of at least two lighting apparatuses described above and below with reference to Figs. 12, 15 to 18, 20 and 21.

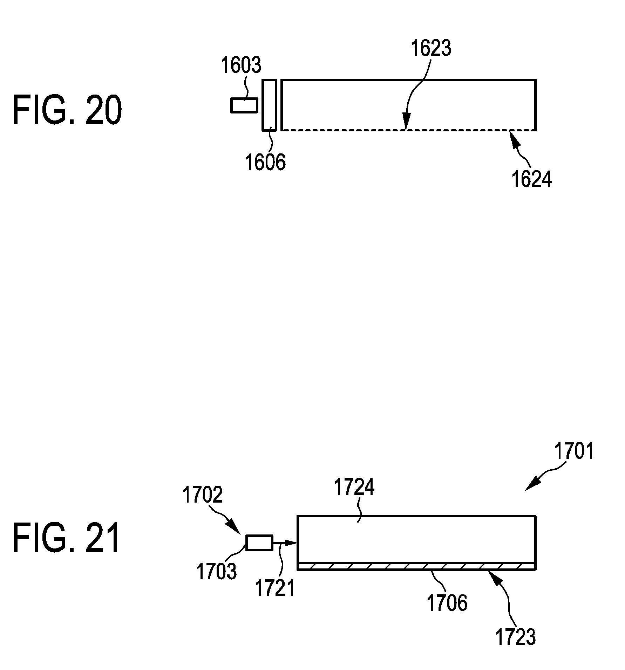

In the embodiments described above with reference to Figs. 12 and 15 to 19 the speckle pattern generated on the rough surface can also be modified by modifying the position of the laser light. This is schematically and exemplarily illustrated in Fig. 20. In Fig. 20, between a light housing 1624 comprising a rough inner surface 1623 and a laser 1603 a redirecting element 1606 is arranged for redirecting the laser light. The redirecting element 1606 can be regarded as a first decorative illumination pattern modifying unit. In another embodiment, also the position of the laser 1603 itself can be modified by a first decorative illumination pattern modifying unit being, for example, a motor for displacing the laser 1603, wherein by modifying the position of the laser 1603 the position of the laser beam is modified for modifying the first decorative illumination pattern. The redirecting element 1606 preferentially comprises a mechanical element like a mini-motor or a MEMS device, or a non-mechanical electro-optical element such as liquid crystal optics, a fluid focus lens/electrowetting element, an electro-phoretic element, and/or suspended particle devices. Also this modification of the position of the laser beam can be used to create dynamic sparkling effects.

Fig. 21 shows schematically and exemplarily a further embodiment of a lighting apparatus for generating a decorative illumination pattern. The lighting apparatus 1701 comprises a first light device 1702 comprising a coherent light source 1703 being, also in this embodiment, a laser. The laser 1703 emits a laser beam 1721, which is coupled into a light housing 1724 being, for example, a light plate or a light tile. The light housing 1724 comprises an illumination pattern modifying unit 1706 which gives rise to speckle formation, if a rough outer surface 1723 of the illumination pattern modifying unit 1706 is illuminated. The rough surface 1723 can be regarded as a speckle pattern generation element and the illumination pattern modifying unit 1706 is adapted to modify the formed speckle pattern by applying an electric field across the illumination pattern modifying unit 1706. The illumination pattern modifying unit 1706 may be an electro-optical element like a PDLC, a LC Gel, a LC cell comprising a surface relief, which may be replicated, a GRIN lens array, an electro-phoretic element, an electrowetting element et cetera.

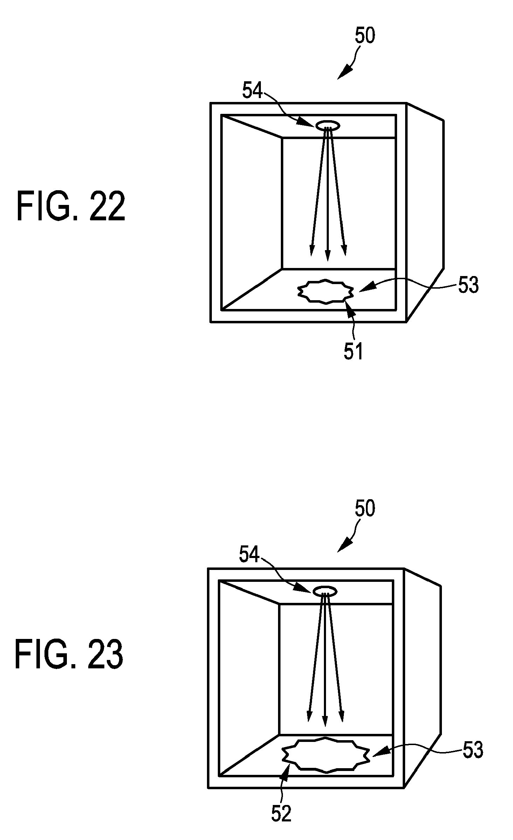

Figs. 22 to 27 exemplarily show preferred uses of the illumination apparatus.

Fig. 22 shows schematically and exemplarily the use of the illumination apparatus in a product display 50, wherein an illumination pattern 51 is generated on an inner side of the product display 50. In Fig. 22 an illumination pattern 51 is shown, which is different to the illumination pattern 52 shown in Fig. 23, which shows the same product display 50. These different illumination patterns 51, 52 can be achieved by using a first decorative illumination pattern modifying unit as described above. The lighting apparatus is preferentially located inside the ceiling of the product display 50, wherein the ceiling comprises a hole or a window 54 for allowing the light to leave the ceiling.

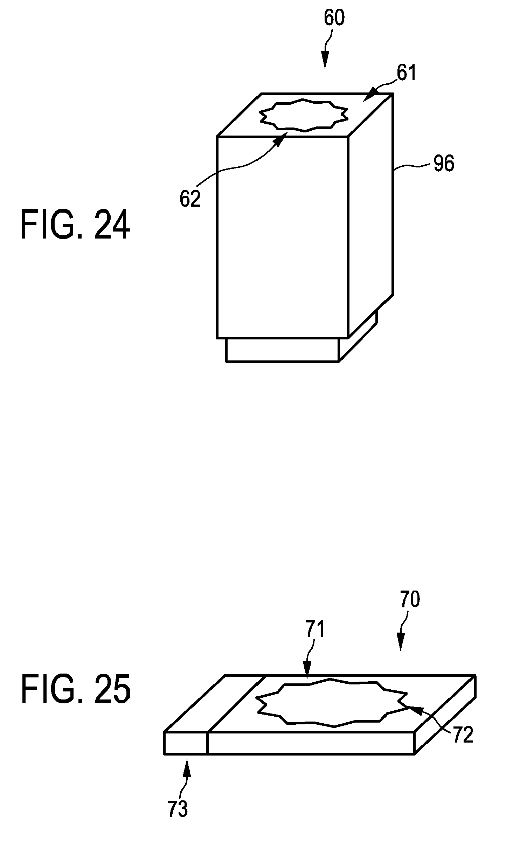

Fig. 24 shows schematically and exemplarily a product presentation stand 60 comprising an upper element 61, which is transparent for the generated illumination pattern. The lighting apparatus is located preferentially inside the product presentation stand 60 and the first illumination pattern 62 is generated on the inner side of the transparent element 61.

Fig. 25 shows schematically and exemplarily a shelf 70 on which, for example, a product can be placed. The lighting apparatus is preferentially arranged inside the shelf 70, and the upper element 71 shown in Fig. 25 is transparent for allowing an illumination pattern 72 generated within the shelf to be seen outside the shelf. The lighting apparatus is preferentially arranged in a part 73 at the edge of the shelf 70. The shelf can also be used as a light tile, i.e. the shelf can be formed by the above described light housing. The illumination pattern is preferentially generated on the inner side of the upper element 71.

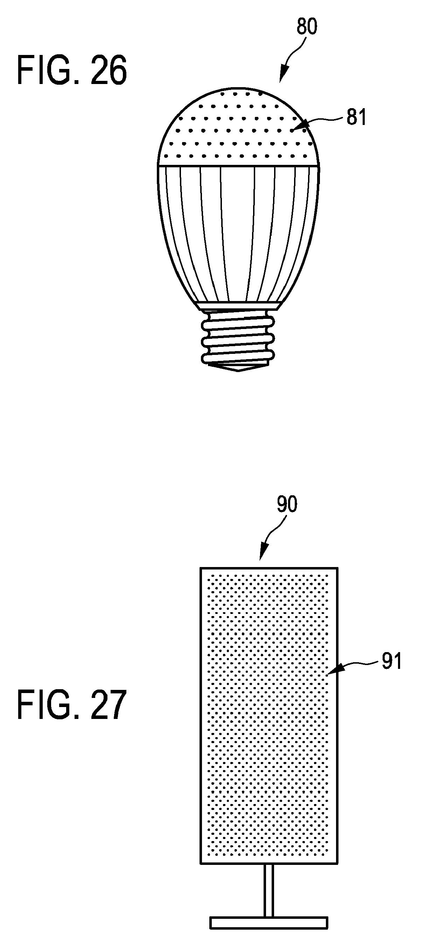

Fig. 26 shows schematically and exemplarily a lamp 80, wherein the lighting apparatus is located inside this lamp 80. Also this lamp 80 comprises a transparent upper element 81 for allowing the generated illumination pattern to leave the lamp 80. The first illumination pattern is preferentially generated on the inner side of the upper transparent element 81.

Fig. 27 shows schematically and exemplarily a luminaire 90, wherein the lighting apparatus is located inside this luminaire 90. Also this luminaire 90 comprises a transparent element 91 for allowing the generated illumination pattern to leave the luminaire 90. The first illumination pattern is preferentially generated on the inner side of the transparent element 91.

Although with reference to Figs. 22 to 27 the lighting apparatus has been adapted as being located within the product display, product presentations stand, shelf, lamp and luminaire, respectively, the lighting apparatus can also be regarded as comprising these elements, wherein the further elements of the lighting apparatus like the first light device, a multimode fiber and/or a speckle pattern generation element, and the first decorative illumination pattern modifying unit are preferentially located within these elements, i.e. within the product display, the product presentation stand, the shelf, the lamp and the luminaire, respectively.

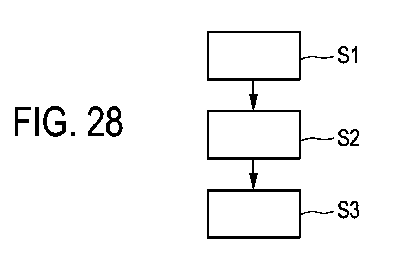

In the following an embodiment of a lighting method for generating a decorative illumination pattern will exemplarily be described with reference to a flowchart shown in Fig. 28.

In step S1, a coherent light source emits a coherent light beam, and in step S2 a first decorative illumination pattern is generated by at least one of the following ways:
a) coupling the coherent light beam into a multimode fiber such that the coherent light beam propagates in different fiber modes, which are decoupled from the multimode fiber and interfere for generating the first decorative illumination pattern, and
b) illuminating a speckle pattern generation element with the coherent light beam for generating a speckle pattern as the first decorative illumination pattern.

In step S3, the first decorative illumination pattern is modified over time by a first decorative illumination pattern modifying unit.

It should be noted that steps S1 to S3 can be performed in another sequence or simultaneously. For example, if the first decorative illumination pattern is modified, of course simultaneously the coherent light source emits the coherent light beam and the first decorative illumination pattern is generated by the at least one of the above mentioned ways a) and b).

Although in the above described embodiments the first decorative illumination pattern modifying unit is adapted to modify the first decorative illumination pattern in certain ways, the first decorative illumination pattern modifying unit can also be adapted to modify the first decorative illumination pattern in other ways. In particular, the first decorative illumination pattern modifying unit can be adapted to apply at least one of heat or coldness, vibration and pressure to the lighting apparatus for modifying the first decorative illumination pattern.

In the above described embodiments the first decorative illumination pattern modifying unit is preferentially adapted to modify the first decorative illumination pattern with a frequency below 50 Hz, further preferred with a frequency in the range of 0.1 to 50 Hz, further preferred with a frequency in the range of 0.5 to 20 Hz, and even further preferred with a frequency in the range of 1.0 to 10 Hz.

Although different ways of modifying the first decorative illumination pattern are described with respect to different embodiments, at least some of these ways of modifying the first decorative illumination pattern can be combined in a single embodiment of the lighting apparatus to allow the lighting apparatus to modify the first decorative illumination pattern in different ways.

Although the above described embodiments comprise certain numbers and kinds of light sources, the lighting apparatus for generating a decorative illumination pattern can also comprise another number of light sources and/or other kinds of light sources. For example, the above described embodiments, which are adapted to produce a speckle pattern can be combined with other luminaires and lamps. For instance, the above described plate configuration embodiments can be combined with a standard light tile, and the above described spotlight configurations, for example, the configurations shown in Figs. 8, 13 and 14, can be combined with white or colored accent lighting or living colors for applications such as shop lighting and ambient creation. In particular, a light emitting diode can be used as a second light device.

The lasers used in the above described embodiments are preferentially laser diodes. However, in addition or alternatively, another kind of laser can be used like gas lasers.

The lighting apparatus is preferentially adapted to be used in decorative lighting including using light tiles or light in a luminaire housing, ambient creation like accent lighting/spot lighting, and shop lighting like product displays and shelves, windows, furniture, consumer electronics such as mobile phones and MP3 players.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

The control of the lighting apparatus in accordance with the lighting method can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a lighting apparatus for generating a decorative illumination pattern. The lighting apparatus is adapted to a) couple a coherent light beam into a multimode fiber of the lighting apparatus such that the coherent light beam propagates in different fiber modes, which are decoupled from the multimode fiber and interfere for generating the first decorative illumination pattern, and/or b) illuminate a speckle pattern generation element with the coherent light beam for generating a speckle pattern as the first decorative illumination pattern. Since the interference of the different fiber modes and the speckle pattern are very sensitive to external influences, the first decorative illumination pattern can easily be modified over time by a first decorative illumination pattern modifying unit. This allows, for instance, generating a dynamic first decorative illumination pattern, which shows varying dynamic sparkling effects.

## Claims

1. A lighting apparatus for generating a decorative illumination pattern, the lighting apparatus (1; 701) comprising a first light device (2; 702) including a coherent light source (3; 703) emitting a coherent light beam, wherein the lighting apparatus (1; 701) is adapted to generate a first decorative illumination pattern (4; 704) by at least one of the following ways:
a) coupling the coherent light beam into a multimode fiber (5) of the lighting apparatus (1) such that the coherent light beam propagates in different fiber modes, which are decoupled from the multimode fiber and interfere for generating the first decorative illumination pattern (4), and
b) illuminating a speckle pattern generation element (723) with the coherent light beam for generating a speckle pattern as the first decorative illumination pattern (704),
wherein the lighting apparatus (1; 701) further comprises a first decorative illumination pattern modifying unit (6; 706) for modifying the first decorative illumination pattern (4; 704) over time.

2. The lighting apparatus as defined in claim 1, wherein the multimode fiber (105) and the first decorative illumination pattern modifying unit (106) are integrated, wherein the multimode fiber (105) is arranged to dangle for forming the first decorative illumination pattern modifying unit (106).

3. The lighting apparatus as defined in claim 1, wherein the first decorative illumination pattern modifying unit is adapted to apply at least one of heat or coldness, vibration and pressure to the lighting apparatus for modifying the first decorative illumination pattern.

4. The lighting apparatus as defined in claim 4, wherein first decorative illumination pattern modifying unit (206) is formed by arranging the multimode fiber (205) and a temperature changing element (209) of the lighting apparatus (201), which changes its temperature, such that the multimode fiber (205) is in thermal contact with the temperature changing element (209).

5. The lighting apparatus as defined in claim 1, wherein the first decorative illumination pattern modifying unit is formed by adapting at least a part of the multimode fiber (305) to be integrated into a person pressure element (316), to which persons generally apply pressure, such that pressure is applied to the multimode fiber (305) for modifying the first decorative illumination pattern (304), if the person uses the person pressure element (316).

6. The lighting apparatus as defined in claim 1, wherein the first decorative illumination pattern modifying unit (406) further comprises an acting unit (420) for acting on the multimode fiber (405) such that the first decorative illumination pattern (404) is modified.

7. The lighting apparatus as defined in claim 1, wherein the lighting apparatus (201) comprises a second light device (210) for generating a second illumination pattern (214), wherein the lighting apparatus (201) is adapted to superimpose the first and second illumination patterns (204, 214).

8. The lighting apparatus as defined in claim 1, wherein the lighting apparatus comprises a transparent light housing (824) having a rough inner surface (823) being the speckle pattern generation element and wherein the first decorative illumination pattern is generated on the rough inner surface (823) as speckle pattern.

9. The lighting apparatus as defined in claim 8, wherein the first light device comprises two coherent light sources (1103, 1125) emitting two coherent light beams for illuminating the rough inner surface (1123) of the light housing (1124), wherein the two coherent light sources (1103, 1125) are arranged at two opposing ends of the light housing (1124).

10. The lighting apparatus as defined in claim 8, wherein the light housing (1324) comprises a redirecting surface (1331) for redirecting the coherent light beam towards the rough inner surface (1323).

11. The lighting apparatus as defined in claim 1, wherein the first light device (902) comprises several coherent light sources (903, 925) emitting several coherent light beams (921, 926) which illuminate the speckle pattern generation element for generating several overlapping speckle patterns forming the first decorative illumination pattern, wherein the first decorative illumination pattern modifying unit (906) is adapted to modify the frequency of at least one of the several coherent light sources (903, 925) for modifying the first decorative illumination pattern.

12. The lighting apparatus as defined in claim 1, wherein the speckle pattern generation element is a rough surface (1723) and wherein the first decorative illumination pattern modifying unit (1706) is adapted to modify the roughness of the rough surface (1723), on which the speckle pattern is generated.

13. The lighting apparatus as defined in claim 1, wherein first decorative illumination pattern modifying unit is adapted to modify the first decorative illumination pattern with a frequency below 50 Hz.

14. A lighting method for generating a decorative illumination pattern, the lighting method comprising:
- emitting a coherent light beam by a coherent light source (3; 703) of a first light device (2; 702),
- generating a first decorative illumination pattern (4; 704) by at least one of the following ways:
a) coupling the coherent light beam into a multimode fiber (5) such that the coherent light beam propagates in different fiber modes, which are decoupled from the multimode fiber and interfere for generating the first decorative illumination pattern (4), and
b) illuminating a speckle pattern generation element (723) with the coherent light beam for generating a speckle pattern as the first decorative illumination pattern (704),
- modifying the first decorative illumination pattern (4; 704) over time by a first decorative illumination pattern modifying unit (6; 706).

15. A lighting computer program for generating a decorative illumination pattern, the lighting computer program comprising program code means for causing a lighting apparatus as defined in claim 1 to carry out the steps of the lighting method as defined in claim 14, when the computer program is run on a computer controlling the lighting apparatus.
